# EUROPEAN PATENT SPECIFICATION

(11) **EP 2 592 799 B1**
(45) Date of publication and mention of the grant of the patent: **07.01.2015**
(21) Application number: 12007653.4
(22) Date of filing: 12.11.2012
(51) Int. Cl.: H04L 12/707, H04L 12/721, H04L 12/703, H04L 12/733, H04L 12/705

(54) **Technique for re-routing traffic in a network topology**
Technik zur Umleitung von Verkehr in einer Netztopologie
Technique de réacheminement de trafic dans une topologie de réseau

(30) Priority: 11.11.2011 US 201161558499 P
(43) Date of publication of application: 15.05.2013
(73) Proprietor: Telefonaktiebolaget L M Ericsson (Publ), 164 83 Stockholm (SE)
(72) Inventor: Császár, András, H-2089 Telki (HU); Enyedi, Gabor Sandor, H-1201 Budapest (HU)
(74) Representative: Röthinger, Rainer

(56) References cited:
- US-A1- 2008 107 018
- CSASZAR (ED) G ENYEDI J TANTSURA S KINI ERICSSON J SUCEC S DAS TELCORDIA A: "IP Fast Re-Route with Fast Notification; draft-csaszar-ipfrr-fn-02.txt", IP FAST RE-ROUTE WITH FAST NOTIFICATION; DRAFT-CSASZAR-IPFRR-FN-02.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 31 October 2011 (2011-10-31), pages 1-36, XP015079083, [retrieved on 2011-10-31]
- ATLAS A ET AL: "Basic Specification for IP Fast Reroute: Loop-Free Alternates; rfc5286.txt", BASIC SPECIFICATION FOR IP FAST REROUTE: LOOP-FREE ALTERNATES; RFC5286.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 September 2008 (2008-09-01), XP015060273,
- GABOR RETVARI ET AL: "IP fast ReRoute: Loop Free Alternates revisited", INFOCOM, 2011 PROCEEDINGS IEEE, IEEE, 10 April 2011 (2011-04-10), pages 2948-2956, XP031953521, DOI: 10.1109/INFCOM.2011.5935135 ISBN: 978-1-4244-9919-9
- MENTH M ET AL: "Loop-free alternates and not-via addresses: A proper combination for IP fast reroute?", COMPUTER NETWORKS, ELSEVIER SCIENCE PUBLISHERS B.V., AMSTERDAM, NL, vol. 54, no. 8, 1 June 2010 (2010-06-01), pages 1300-1315, XP027053011, ISSN: 1389-1286 [retrieved on 2009-11-11]
- GABOR RETVARI ET AL: "Optimizing IGP link costs for improving IP-level resilience", DESIGN OF RELIABLE COMMUNICATION NETWORKS (DRCN), 2011 8TH INTERNATIONAL WORKSHOP ON THE, IEEE, 10 October 2011 (2011-10-10), pages 62-69, XP032075201, DOI: 10.1109/DRCN.2011.6076886 ISBN: 978-1-61284-124-3
- SHAND S BRYANT CISCO SYSTEMS M: "IP Fast Reroute Framework; rfc5714.txt", IP FAST REROUTE FRAMEWORK; RFC5714.TXT, INTERNET ENGINEERING TASK FORCE, IETF; STANDARD, INTERNET SOCIETY (ISOC) 4, RUE DES FALAISES CH- 1205 GENEVA, SWITZERLAND, 15 January 2010 (2010-01-15), pages 1-15, XP015068151, [retrieved on 2010-01-15]

## Description

### Technical Field

The present disclosure generally relates to re-routing traffic in a network toporogy based on Shortest Path First, SPF, calculations. Specifically, the network topology in which the traffic is re-routed comprises a plurality of nodes, a traffic source and a traffic destination, wherein a path of nodes represents a shortest source-to-destination path for the traffic from the traffic source to the traffic destination, and wherein each node has pre-calculated a shortest node-to-destination path from the respective node to the traffic destination.

### Background

Ericsson is driving the standardization of IP Fast ReRoute (IPFRR) technology with Fast Notification (IPFRR-FN). In general, standardization proposals should not be too complicated and should provide 100% failure coverage. As of yet, one solution has been standardized, Loop Free Alternates (LFA), see "Basic Specification for IP Fast ReRoute: Loop Free Alternates", IETF RFC5286.

Previous solution proposals tried to follow the local repair principle, which says that for Fast ReRoute (FRR), only a router directly adjacent to the failure may know about the failure, and only these nodes may adjust their forwarding tables. LFA is one such local repair based mechanism, and it is known that it cannot provide failure coverage for all situations as the node directly adjacent to the failure may simple not have loop free alternates.

IPFRR-FN drops the limitation posed by the local repair principle and proposes using explicit fast failure notification to other nodes not directly adjacent to the failure. If remote nodes prepare for remote failures and get notified about failures then they can quickly repair the failure. IPFRR-FN included a quick notification mechanism that was simple enough to be implementable even in the data plane (therefore being very fast).

IPFRR-FN proposes that nodes prepare for all failures which let their default primary next-hops change, even if that failure is not directly adjacent. The routers should calculate a new shortest path (i.e., an SPF calculation on a topology which excludes the anticipated failure), and if the next-hop changes, install the new next-hop as a backup specific to this failure. This backup next-hop is then activated when this failure is detected either locally or by receiving a fast notification message.

One of the concerns about the solution that failure notification messages may need to get propagated to distant nodes for providing 100% failure coverage is a two-fold overhead effect:
- Overhead on preparing for remote failures even far away and maintaining backup information for such failures
- Signalling overhead

An analysis on realistic topologies shows that above approach typically does not require that nodes very far away learn about the failure. Therefore, the time-to-live (TTL) field of the notifications may be set to a small value (such as 3, 4 or 5). In this way a limited scope for the notifications may be set.

In the previous solutions, a router detecting a failure activates a next-hop on the new shortest path which avoids the failure. In many situations, this new shortest path may require a further next-hop to be fast notified as well about the failure.

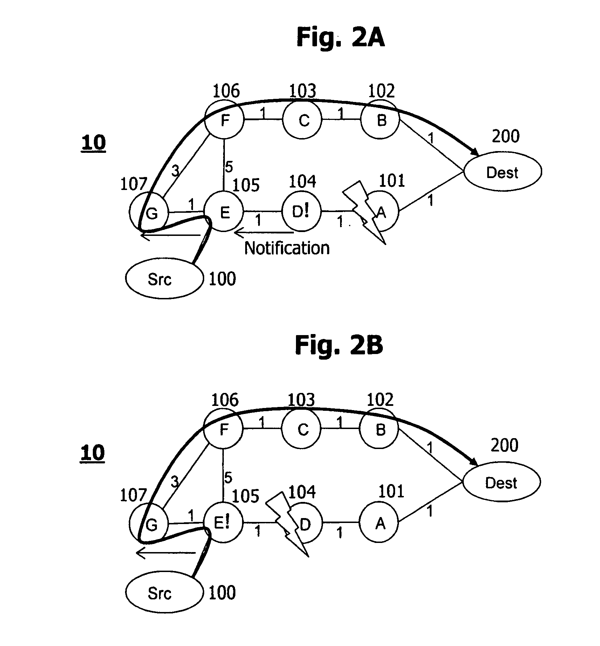

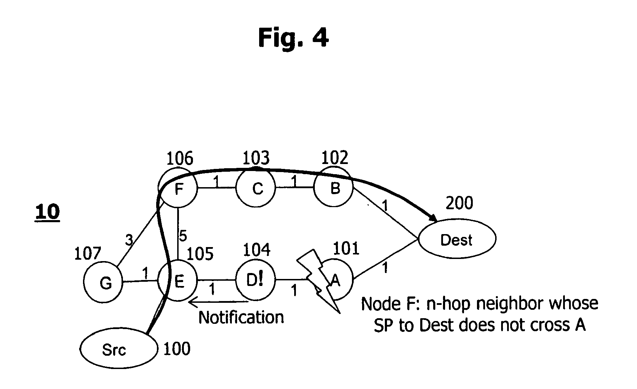

An example is shown in Fig. 4. The normal shortest path from source Src 100 to Destination Dest 200 is via E 105 - D 104 - A 101. Let us see what could happen if node A 101 goes down (see Figs. 2A and 4). Node D 104 detects the failure.

In the existing IPFRR-FN, node D would have pre-calculated a new shortest path without A, which would be D 104 - E 105 - G 107 - F 106 - C 103 - B 102, so it would pre-install next-hop E 105 as the backup next-hop for failure of A 101 or D 104 (see Figs. 2A and 2B). E 105 would also pre-install next-hop G 107 as the backup next-hop for failure of A 101, and G 107 would pre-install next-hop F 106 as the backup next-hop. It can be easily seen that when the failure happens, nodes E 105 and G 106 both would require that they are explicitly notified about the failure of node A 101, as otherwise they would continue using their existing shortest path leading back to the failure.

"IP Fast RE-Route with Fast Notification", draft-csaszar-ipfrr-fn-02.txt, A. CSASZAR et.al., may be construed to disclose a mechanism that provides IP fast reroute (IPFRR) by using a failure notification (FN) to nodes beyond the ones that first detect the failure (i.e. nodes that are directly connected to the failure point). The paths used when IPFRR-FN is active are in most cases identical to those used after Interior Gateway Protocol (IGP) convergence. The mechanism can address all single link, node, and SRLG failures in an area and has been designed to allow traffic recovery traffic to happen quickly (The goal being to keep traffic loss under 50msec). IPFRR-FN can be a supplemental tool to provide FRR when LFA cannot repair a failure case.

### Summary

Accordingly, there is a need for an implementation of a traffic re-routing technique that avoids one or more of the problems discussed above, or other problems.

There are provided a method, a computer program product and a node according to the independent claims. Developments are set forth in the dependent claims.

Preferably, there is provided a method for re-routing traffic in a network topology based on Shortest Path First, SPF, calculations, the network comprising a plurality of nodes, a traffic source and a traffic destination, wherein a path of nodes represents a shortest source-to-destination path for the traffic from the traffic source to the traffic destination, and wherein each node has pre-calculated a shortest node-to-destination path from the respective node to the traffic destination, the method comprising the steps of receiving, from a second node at a first node, a notification indicating a failed node belonging to the shortest source-to-destination path, the first node being a next-hop of the second node, and selecting, at the first node, a neighbouring node as a new next-hop whose shortest node-to-destination path does not cross the failed node.

In a refinement of the first aspect, the selecting step may further comprise selecting the next-hop of the first node after receiving the notification not being on the shortest node-to-destination path of the first node. Accordingly, a back-up next hop database in the node may be kept minimal.

Preferably, there is provided a method for preparing re-routing traffic in a network topology based on Shortest Path First, SPF, calculations, the network comprising a plurality of nodes, a traffic source and a traffic destination, wherein a path of nodes represents a shortest source-to-destination path for the traffic from the traffic source to the traffic destination, and wherein each node has pre-calculated a shortest node-to-destination path from the respective node to the traffic destination, the method being performed in a second node of two nodes and comprising the steps of checking, at the second node, whether any neighbouring n-hop node has a neighbour whose shortest node-to-destination path does not cross an anticipated failure, n being the integer 1 initially, and if the checking step yields yes, setting, at the second node, a Time-To-Live, TTL, field of a notification to n, the notification indicating a loss of connection to a node belonging to the shortest source-to-destination path, and the back-up next-hop of the second node pointing to a backup route towards the n-hop neighbouring node, and if the checking step yields no: incrementing n by 1, and repeating the checking step.

In a first refinement of the second aspect, the method may further comprise sending, from the second node to the first node, the notification indicating the loss of connection to the node belonging to the shortest source-to-destination path. Accordingly, the first and second nodes interchange all necessary information for enabling the re-routing of traffic.

In a second refinement of both the first and second aspects, the notification may be an explicit notification message. It may be received at a node 'A', and indicate failure of a node 'S' losing connectivity to a node 'E'. Node 'A' may then perform the selecting step so as to select the neighbouring node 'N' as an alternate that does not require explicit notification. The selecting step may further select, responsive to the receiving of the explicit notification message of the node 'S' losing connectivity to the node 'E', the neighbouring node 'N' as an alternate if and only if: Distance(N, D) < Distance(N, S) + Distance(S, D). The neighbouring node 'N' is verified as a loop free alternate node if: Distance(N, D) < Distance(N, E) + Distance(E, D). Moreover, node 'N' may not be a neighbour of node 'S'. The selected node 'N' may be a distant node at least one hop away from the node 'S'.

In a third refinement of both the first and second aspects, the method may further comprise performing, by each of the plurality of nodes in the network, an all-pair SPF calculation to learn the distances between any two nodes. For instance, by means of the precisely set TTL, the receiving nodes may select the fitting n-hop neighbour so as to guarantee optimum path selection in case of node failure.

In a fourth refinement of both the first and second aspects, the method may further comprise calculating, by each of the plurality of nodes in the network, an alternate next-hop for distant failed nodes. The calculating step may further comprise determining respective shortest paths to each respective ones of destination nodes in the network. Each of the respective shortest paths may be a Directed Acyclic Graph, DAG, subgraph and the determining step may utilize Equal-Cost Multi-Path, ECMP, to determine the subgraph.

In a fifth refinement of both the first and second aspects, the method may further comprise pre-calculating, for each link and node, as an anticipated failure, of the subgraph, the n-hop neighbouring node whose shortest node-to-destination path does not cross the anticipated failure, and installing the pre-calculated n-hop neighbouring node as an alternate next-hop for the case when a notification is received with an indication of the anticipated failure. Alternatively, the method may comprise pre-calculating, for each link and node, as an anticipated failure, of the subgraph, whether a next-hop already points to a neighbouring node whose shortest node-to-destination path does not cross the anticipated failure and installing the pre-calculated next hop if the pre-calculating step yields a positive result.

Preferably, there is provided a computer program product comprising program code portions for performing the method of any one of the preceding claims when the computer program product is executed on one or more computing devices. The computer program product may be stored on a computer readable recording medium.

Preferably, there is provided a first node for re-routing traffic in a network topology based on Shortest Path First, SPF, calculations, the network comprising a plurality of node, a traffic source and a traffic destination, wherein a path of nodes represents a shortest source-to-destination path for the traffic from the traffic source to the traffic destination, and wherein each node has pre-calculated a shortest node-to-destination path from the respective node to the traffic destination, the first node comprising means adapted to receive, from a second node at the first node, a notification indicating a loss of connection to a node belonging to the shortest source-to-destination path, the first node being a next-hop of the second node; and means adapted to select, at the node, a neighbouring node as a new next-hop whose shortest node-to-destination path does not cross the connection-lost node.

Preferably, there is provided a second node for preparing re-routing traffic in a network topology based on Shortest Path First, SPF, calculations, the network comprising a plurality of nodes, a traffic source and a traffic destination, wherein a path of nodes represents a shortest source-to-destination path for the traffic from the traffic source to the traffic destination, and wherein each node has pre-calculated a shortest node-to-destination path from the respective node to the traffic destination, the second node comprising means for checking, at the second node, whether any neighbouring n-hop node has a neighbour whose shortest node-to-destination path does not cross an anticipated failure, n being the integer 1 initially, and if the checking step yields yes, setting, at the second node, a Time-To-Live, TTL, field of a notification to n, the notification indicating a loss of connection to a node belonging to the shortest source-to-destination path, and the back-up next-hop of the second node pointing to a backup route towards the n-hop neighbouring node, and if the checking yields no, incrementing n by 1, and repeating the checking step.

It is to be noted that a network entity (or several entities) may implement any of the technical details set forth for the method aspects herein, and may thus achieve the same advantages. In other words, the network entity (or entities) may comprise components adapted to perform any of the method steps disclosed herein.

### Brief Description of the Drawings

The embodiments of the technique presented herein are described herein below with reference to the accompanying drawings, in which:

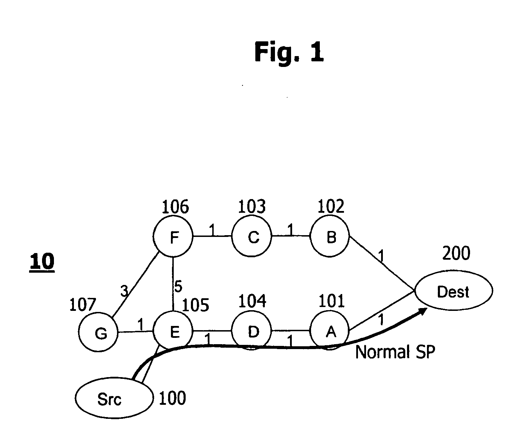

Fig. 1 shows the conventional network in which the normal shortest path from a traffic source to a traffic destination is not interrupted;
Fig. 2A shows a first example of the conventional network in which the normal shortest path from a traffic source to a traffic destination is interrupted, and chosen re-routed path from the traffic source to the traffic destination;
Fig. 2B shows a second example of the conventional network in which the normal shortest path from a traffic source to a traffic destination is interrupted, and the chosen re-routed path from the traffic source to the traffic destination;
Fig. 3 shows components comprised in two exemplary device embodiments realized in the form of two nodes;
Fig. 4 shows an example of the embodiment of the present disclosure in which the normal shortest path from a traffic source to a traffic destination is interrupted, and the chosen re-routed path from the traffic source to the traffic destination; and
Fig. 5 shows two method embodiments which also reflect the interaction between the components of the exemplary device embodiments.

### Detailed Description

In the following description, for purposes of explanation and not limitation, specific details are set forth (such as particular signalling steps) in order to provide a thorough understanding of the technique presented herein. It will be apparent to one skilled in the art that the present technique may be practised in other embodiments that depart from these specific details.

Moreover, those skilled in the art will appreciate that the services, functions and steps explained herein may be implemented using software functioning in conjunction with a programmed microprocessor, or using an Application Specific Integrated Circuit (ASIC), a Digital Signal Processor (DSP) or general purpose computer. It will also be appreciated that while the following embodiments are described in the context of methods and devices, the technique presented herein may also be embodied in a computer program product as well as in a system comprising a computer processor and a memory coupled to the processor, wherein the memory is encoded with one or more programs that execute the services, functions and steps disclosed herein.

One idea of the following embodiments is that a router not necessarily selects a backup next-hop on the new shortest path, but may select any other next-hop which ensures loop free forwarding even without getting explicitly notified about the failure (even if this next-hop is not on the shortest path).

In the scenario described above with reference to Fig. 4, node E 105 could actually select node F 106 as its backup next-hop, even if it is not the shortest path. The advantage is that node F 106 does not need to be notified about the failure of node A 101, since it anyway uses a shortest path towards Dest 200 that does not cross the failure. That is node F 106 is a loop free alternate next-hop at node E 105 with respect to Dest 200.

In the following, the technical aspects of loop free alternates and distant LFA criteria will be described first to facilitate an understanding of the present disclosure.

IETF RFC 5286 defines the criterion for loop free alternates. At a node S, a neighbour N can provide a loop-free alternate towards destination D for the failure of the primary next-hop E if and only if
Distance(N, D) < Distance(N, S) + Distance(S, D)

That is, N has a shorter path to D than going from N to S and then going from S to D, so N will use that shorter path not returning to S, meaning no loops.

Moreover, N is a node protecting LFA if and only if
Distance(N, D) < Distance(N, E) + Distance(E, D)

For the following embodiments, we introduce an LFA criterion for "distant" LFA, so we call it dLFA. For a notification of S losing connectivity to a node E, a node A may select its neighbour N as an alternate towards if and only if:
Distance(N, D) < Distance(N, S) + Distance(S, D)

The dLFA is node protecting if
Distance(N, D) < Distance(N, E) + Distance(E, D)

Note that now node N is not a neighbour of S. It is a distant node, potentially several hops away. Node E got notified about the S-E failure with an explicit notification message and tries to select a neighbour N as an alternate that does not require explicit notification anymore.

In the example of Figure 4, node A 101 goes down, detected by node D 104. Explicit failure notification gets to node E 105. Node will find for its neighbour F 106 that:
Distance(F,Dest) < Distance(F,A) + Distance(A,Dest),
   so F 106 is a node-protecting dLFA.

It also finds that
Distance(G,Dest) = Distance(G,D) + Distance(D,Dest),
so E's 105 other neighbour G 107 is not a dLFA.

### Failure Preparation

Since the calculation of distance needs distances to be available from any node to any other node, routers need to run an all-pair SPF calculation to learn the shortest path (and the distances) between any two nodes 101 to 107.

### Finding the TTL required for originating a notification about a local failure

First, it is checked if there exists a local LFA for the anticipated failure. If yes, TTL=0, i.e. the failure can be handled locally, and no notification needs to be originated.

Next, the one-hop neighbours are taken and checked if any one of them has a dLFA for the anticipated failure. If yes, TTL=1 and the backup route for that failure should point towards the found one-hop neighbour.

If no one-hop neighbour is found, one proceeds to two-hop neighbours and checks if any one of them has a dLFA for the anticipated failure. If yes, TTL=2 and the backup route for that failure should point towards the found two-hop neighbour.

This is continued until a suitable node is found.

### Preparing for distant failures

Another task of a router S is to calculate the alternate next-hops for distant failures, where needed. One example algorithm could be like this:

For each destination node D, router S calls up its shortest paths towards D. Due to ECMP this sub-graph may be directed acyclic graph (DAG), as the paths may branch in node S or later and merge again in node D or earlier.

For any links and nodes of this subgraph, pre-calculate according to the algorithm in "Finding the TTL required for originating a notification about a local failure" the n-hop neighbour that has a dLFA closest to the failure 101. If the n-hop neighbour is S itself, then it should install the LFA, otherwise it need not prepare for this failure. Note: if n is less than number of hops between S and the failure, node S will not get the notification about the failure, so it does not have to prepare either.

A simpler algorithm would be that for any links and nodes of the above discussed subgraph S pre-calculates if it has a dLFA. If it has, it may install it. This is a fast algorithm to find alternates but may generate alternates superfluously as some of the notifications do not even reach node S.

As has become apparent, the TTL value that can be set on Fast Notification messages can be decreased. This results in less signalling/processing overhead, and since backup next-hops are found likely closer to the destination, it means that fewer nodes will need to store backup next-hops. The size of the backup next-hop database can thus also be decreased.

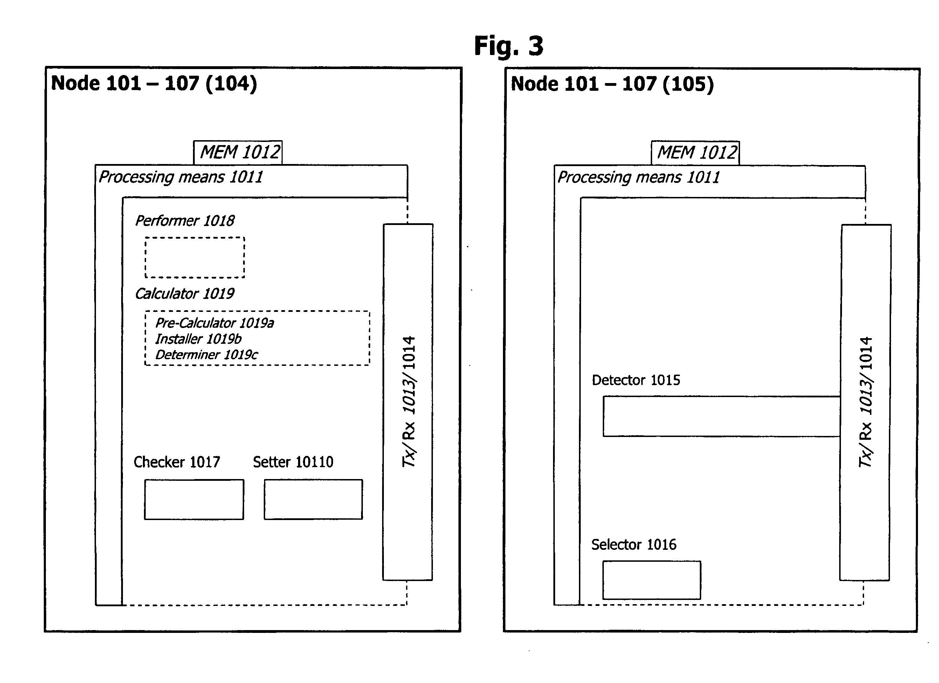

Fig. 3 shows two general embodiments of the node 101 - 107 (referred to as nodes 104 or 105 for simplicity without being restricted thereto) in a network 10. The embodiments may be implemented in combination with the foregoing teachings.

As shown in Fig. 3, the node 104 or 105 comprises a core functionality (e.g., one or more of a central processing unit (CPU), dedicated circuitry and/or a software module) 1011, an optional memory (and/or database) 1012, an optional transmitter 1013 and a receiver 1014. Moreover, the node 105 comprises a detector 1015 and a selector 1016. The node 104 comprises a checker 1017, an optional performer 1018, an optional calculator 1019 and a setter 10110. In addition, the calculator 1019 may further comprise an optional pre-calculator 1019a, an optional installer 1019b and an optional determiner 1019c.

As partly indicated by the dashed extensions of the functional block of the CPU 1011, the detector 1015 and the selector 1016 (of the node 105) and the checker 1017, the performer 1018, the calculator 1019, the pre-calculator 1019a, the installer 1019b, the determiner 1019c and/or the setter 10110 (of the node 104) as well as the memory 1012, the transmitter 1013 and the receiver 1014 may at least partially be functionalities running on the CPU/processing means 1011, or may alternatively be separate functional entities or means controlled by the CPU 1011 and supplying the same with information. For the nodes 104 or 105, the transmitter and receiver components 1013, 1014 may be realized to comprise suitable interfaces and/or suitable signal generation and evaluation functions.

The CPU 1011 may be configured, for example, using software residing in the memory 1012, to process various data inputs and to control the functions of the memory 1012, the transmitter 1013 and the receiver 1013 (as well the detector 1015 and the selector 1016 (of the node 105) and the checker 1017, the performer 1018, the calculator 1019, the pre-calculator 1019a, the installer 1019b, the determiner 1019c and/or the setter 10110 (of the node 104)). The memory 1012 may serve for storing program code for carrying out the methods according to the aspects disclosed herein, when executed by the CPU 1011.

It is to be noted that the transmitter 1013 and the receiver 10014 may be provided as an integral transceiver, as is indicated in Fig. 3. It is further to be noted that the transmitters/receivers 1013, 1014 may be implemented as physical transmitters/receivers for transceiving via an air interface or a wired connection (e.g., between two nodes when they are embodied as separate entities), as routing/forwarding entities/interfaces between network elements (e.g., between two nodes when they are embodied as functionally adjacent entities), as functionalities for writing/reading information into/from a given memory area (e.g., between the two nodes when they are embodied as two (or more) logical units disposed on one physical unit) or as any suitable combination of the above. At least one of the above-described detector 1015, selector 1016, checker 1017, performer 1018, calculator 1019, pre-calculator 1019a, installer 1019b, determiner 1019c and/or the setter 10110 (of the node 105), or the respective functionalities, may also be implemented as a chipset, module or subassembly.

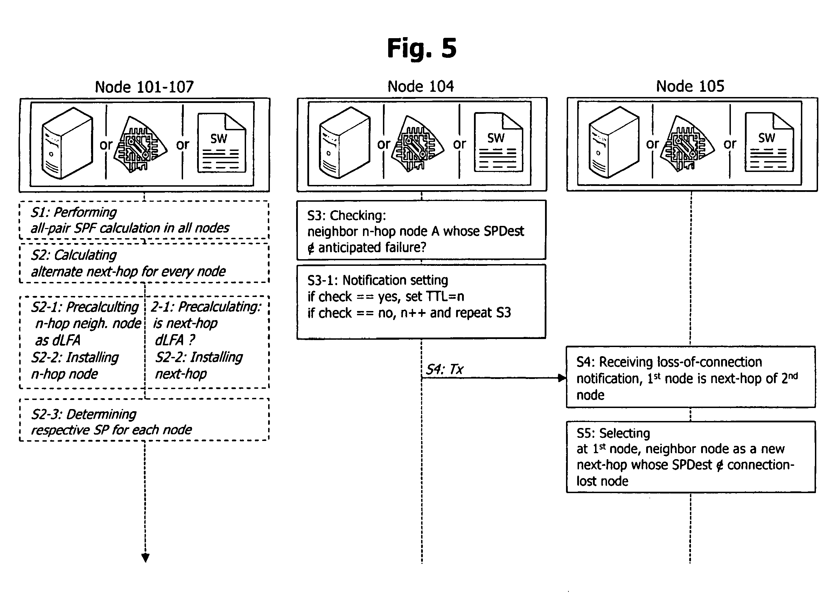

Fig. 5 illustrates two embodiments of a method for (preparing) re-routing traffic in a network topology based on Shortest Path First, SPF, calculations. In the signalling diagram of Fig. 5, time aspects between signalling are reflected in the vertical arrangement of the signalling sequence as well as in the sequence numbers. It is to be noted that the time aspects indicated in Fig. 5 do not necessarily restrict any one of the method steps shown to the step sequence outlined in Fig. 5. This applies in particular to method steps that are functionally disjunctive with each other. For instance, all steps S1 to S5 are shown to be timely substantially flowing; however, especially steps S1 to S3-1 are preparatory measures that may also be performed significantly in advance of steps S4 and S5; in addition or alternatively, the steps S1 to S3-1 may also be (re-)performed after steps S4 and S5 (e.g. in case of a network 10 topology change due to permanent node insertion or removal).

Referring still to the signalling diagram of Fig. 5 (to be read along with the nodes 104 and 105 illustrated in Fig. 3 and the exemplary use case in Fig. 4), the network 10 comprises a plurality of nodes 101 - 107, a traffic source 100 and a traffic destination 200, wherein a path of nodes 105, 104, 101 represents a shortest source-to-destination path for the traffic from the traffic source 100 to the traffic destination 200 in an uninterrupted/benign case, and wherein each node has pre-calculated a shortest node-to-destination path from the respective node to the traffic destination. It can be said that the network 10 comprises substantially one global shortest (comparatively static) source-to-destination path that defines the optimum benign flow of traffic from source 100 to destination 200; conversely, there may be as many shortest node-to-destination paths as there are nodes in the network 10, i.e. each node 101-107 has its individual shortest node-to-destination path. For example, for node E 105, this shortest node-to-destination path is 105-104-101-Dest, whereas for node F 106, this shortest node-to-destination path is 106-103-102-Dest. As will be detailed herein below, the term "shortest" path may be linked to the (accumulated) path costs (see numbers on the links between nodes in Fig. 4) involved when traffic hops from one node to another. In the example, the shortest node-to-destination path is 105-104-101-Dest of node E has path costs of 3, whereas for node F 106, the shortest node-to-destination path 106-103-102-Dest has also path costs of 3.

In an optional preparatory step S1, the performer 1018 of the node 105 performs performing, by each of the plurality of nodes 101 - 107 in the network 10, an all-pair SPF calculation to learn the distances between any two nodes 101 -107.

Moreover, in another optional preparatory step S2, the calculator 1019 performs calculating, by each of the plurality of nodes 101 - 107 in the network 10, an alternate next-hop for distant failed nodes. As stated above, in case of node E 105, this alternate next-hop may be node F 106, although, at first glance, node G 107 yields more favourable path costs.

Accordingly, in optional step S2-1, the pre-calculator 1019a of the node 105 performs pre-calculating, for each link and node, as an anticipated failure, of the subgraph, the n-hop neighbouring node whose shortest node-to-destination path does not cross the anticipated failure. Moreover, in optional step S2-2, the installer 1019b of the node 105 performs installing the pre-calculated n-hop neighbouring node as an alternate next-hop for the case when a notification is received with an indication of the anticipated failure. As an alternative, in optional step S2-1, the pre-calculator 1019a of the node 105 performs pre-calculating, for each link and node, as an anticipated failure, of the subgraph, whether a next-hop already points to a neighbouring node whose shortest node-to-destination path does not cross the anticipated failure. Moreover, in optional step S2-2, the installer 1019b of the node 105 performs installing the pre-calculated next hop if the pre-calculating step yields a positive result.

Moreover, in an optional step S2-3 applying to both the above alternatives, the calculating step S2 may further comprise, by the determiner 1019c of the node 105, determining respective shortest paths to each respective ones of destination nodes in the network. In this case, each of the respective shortest paths may be a Directed Acyclic Graph, DAG, subgraph and the determining step S2-3 may utilize Equal-Cost Multi-Path, ECMP, to determine the subgraph.

Then, in step S3, the checker 1017 of the node 104 may perform checking whether any neighbouring n-hop node has a shortest node-to-destination path not crossing the anticipated failure, n being the integer 1 initially. Should the checking step S3 yield yes, then the setter 10110 of the node 105 performs, in optional step S4, setting, at the first node 105, a Time-To-Live, TTL, field of the notification to n, the notification indicating a loss of connection to a node (101) belonging to the shortest source-to-destination path, a next-hop of the first node 105 pointing to a backup route for the n-hop neighbouring node. Should the checking step S3 yield no, then n is incremented by 1, and the checking step S3 is repeated.

Moreover, in an optional (from the viewpoint of node 104) step S4, the node 104 (the transmitter 1013) may transmit the thus set notification to the node 105.

As stated above, the just-described preparatory measures may also be (re-) performed after the following operation steps.

In a step S4, the receiver 1014 of the node 105 performs receiving, from the second node 104 at the first node 105, a notification indicating a loss of connection to a node 101 belonging to the shortest source-to-destination path, the first node 105 being a next-hop of the second node 104. Moreover, in step S5, the selector 106 performs selecting, at the first node 105, a neighbouring node 106 as a new next-hop whose shortest node-to-destination path does not cross the connection-lost node.

In addition, the selecting step S5 may further comprise selecting the next-hop (in the sense of a pointer or entry) of the first node 105 after receiving S4 the notification not being on the shortest node-to-destination path of the first node 105. In a practical example, from the view point of node 105 in terms of path costs, node G 107 would be more favourable, since the cost of the node-to-destination path from node E 105 would be 1+3+1+1+1 = 7 via node G, but are 5+1+1+1 = 8 via node F 106. Thus, under normal circumstances, node F would not be selected; however, according to the present disclosure, it is that node F that would be selected.

Moreover, the notification may be an explicit notification message, may be received at a node 'A' (for instance, at node 105), and may indicate failure of a node 'S' (for instance, node 104) losing connectivity to a node 'E' (for instance, node 101). In that case, node 'A' (e.g. node 105) may perform the selecting step S5 so as to select the neighbouring node 'N' (e.g. node 107) as an alternate that does not require explicit notification. In other words, since node 107 has a normal shortest node-to-destination path via nodes 103 and 102, node 107 does not need the explicit notification, since its node-to-destination path is the shortest irrespective of the node failure. Conversely, this is not the case for node 105: node 105 has a normal shortest node-to-destination path via nodes 104 and 101 (path costs 1+1+1 = 3); accordingly, in case of failure of node 101, node 105 needs the explicit notification.

As an implementation example for a selection routine, the selecting step S5 may further select, responsive to the receiving S4 of the explicit notification message of the node 'S' (e.g. 104) losing connectivity to the node 'E' (e.g. 101), the neighbouring node 'N' (e.g. 106) as an alternate if and only if:
Distance(N, D) < Distance(N, S) + Distance(S, D).

For instance, in the example of Fig. 4, the formula for node 106 would read:

| Distance(106, 200) | < Distance(106, 104) | + Distance(104, 200) → |
|---|---|---|
| 1+1+1 | < 1+1+3 | + 1+1 |
| 3 | < 5 | + 2 (true) |

Conversely, node G 107 in the example of Fig. 4 does not fulfil the formula, and is thus no alternate:

| Distance(107, 200) | < Distance(107, 104) | + Distance(104, 200) → |
|---|---|---|
| 1+1+1+1 | < 1+1 | + 1+1 |
| 4 | < 2 | + 2 (false) |

Moreover, the neighbouring node 'N' (106) is verified as a loop free alternate node if:
Distance(N, D) < Distance(N, E) + Distance(E, D),
wherein node 'N' (106) is not a neighbour of node 'S' (104). In other words, the selected node 'N' (106) is a distant node at least one hop away from the node 'S' (104); in the example of Fig. 4, node 106 is a 2-hop neighbour of node 104.

For instance, in the example of Fig. 4, the formula would read:

| Distance(106, 200) | < Distance(106, 101) | + Distance(101, 200) → |
|---|---|---|
| 1+1+1 | < 1+1+1+3 | + 1 |
| 3 | < 6 | + 1 (true) |

In the foregoing, principles, embodiments and various modes for implementing the technique disclosed herein have exemplarily been described. The present invention should not be construed as being limited to the particular principles, embodiments and modes discussed herein. Rather, it will be apparent that various changes and modifications may be made by a person skilled in the art without departing from the scope of the present invention as defined in the claims that follow.

## Claims

1. A method for re-routing traffic in a network (10) topology based on Shortest Path First, SPF, calculations, the network comprising a plurality of nodes (101 - 107), a traffic source 'Src' (100) and a traffic destination 'Dest' (200), wherein a path of nodes (105, 104, 101) represents a shortest source-to-destination path for the traffic from the traffic source to the traffic destination, and wherein each node has pre-calculated a shortest node-to-destination path from the respective node to the traffic destination, the method being performed in a first node 'A' (105) of two nodes and comprising the steps of:
receiving (S4), from a second node 'S' (104) at the first node, a notification indicating a loss of connection to a third node 'E' (101) belonging to the shortest source-to-destination path, the first node being a next-hop of the second node; and
selecting (S5), at the first node, a neighbouring node as a new next-hop whose shortest node-to-destination path does not cross the connection-lost node
wherein:
the notification is an explicit notification message, is received at the first node 'A' (105), and indicates failure of the second node 'S' (104) losing connectivity to the third node 'E' (101),
the first node 'A' (105) performs the selecting step so as to select a fourth neighbouring node 'N' (106, 107) as an alternate that does not require explicit notification due to its pre-calculated node-to-destination path being the shortest node-to-destination path irrespective of the node failure, and
the selecting step further selects, responsive to the receiving of the explicit notification message of the second node 'S' losing connectivity to the third node 'E', the fourth neighbouring node 'N' (106) as an alternate if and only if:
Distance(fourth node N, Dest) < Distance(fourth node N, second node S) + Distance(second node S, Dest).

2. The method of claim 1, wherein the selecting step further comprises selecting the new next-hop of the first node after receiving the notification not being on the shortest node-to-destination path of the first node.

3. The method of claim 1,
wherein the fourth neighbouring node 'N' is node-protecting if:
Distance(fourth node N, Dest) < Distance(fourth node N, third node E) + Distance(third node E, Dest).

4. The method of claim 3, wherein node 'N' is not a neighbour of node 'S'.

5. The method of claim 1, 3 or 4, further comprising:
performing (S1), by each of the plurality of nodes in the network, an all-pair SPF calculation to learn the distances between any two nodes.

6. The method of any of the preceding claims, further comprising:
calculating (S2), by each of the plurality of nodes in the network, an alternate next-hop for distant connection-lost nodes.

7. The method of claim 6, wherein the calculating step further comprises:
determining (S2-3) respective shortest paths to each respective ones of destination nodes in the network.

8. The method of claim 7, wherein each of the respective shortest paths is a Directed Acyclic Graph, DAG, subgraph and the determining step utilizes Equal-Cost Multi-Path, ECMP, to determine the subgraph.

9. The method of claims 8, further comprising:
pre-calculating (S2-1), for each link and node, as an anticipated failure, of the subgraph, whether a next-hop already points to a neighbouring node whose shortest node-to-destination path does not cross the anticipated failure; and
installing (S2-2) the pre-calculated next hop if the pre-calculating step yields a positive result.

10. A computer program product comprising program code portions for performing the method of any one of the preceding claims when the computer program product is executed on one or more computing devices.

11. The computer program product of claim 10, wherein the computer program product is stored on a computer readable recording medium.

12. A first node 'A' (105) for re-routing traffic in a network (10) topology based on Shortest Path First, SPF, calculations, the network comprising a plurality of nodes (101 - 107), a traffic source 'Src' (100) and a traffic destination 'Dest' (200), wherein a path of nodes (105, 104, 101) represents a shortest source-to-destination path for the traffic from the traffic source to the traffic destination, and wherein each node has pre-calculated a shortest node-to-destination path from the respective node to the traffic destination, the first node comprising:
means (1014) adapted to receive, from a second node 'S' (104) at the first node, a notification indicating a loss of connection to a third node 'E' (101) belonging to the shortest source-to-destination path, the first node being a next-hop of the second node; and
means (1016) adapted to select, at the first node, a neighbouring node as a new next-hop whose shortest node-to-destination path does not cross the connection-lost node,
wherein:
the notification is an explicit notification message and adapted to be received at the first node 'A' (105), and to indicate failure of the second node 'S' (104) losing connectivity to the third node 'E' (101),
the first node 'A' (105) is adapted to perform:
- so as to select a fourth neighbouring node 'N' (106, 107) as an alternate that does not require explicit notification due to its pre-calculated node-to-destination path being the shortest node-to-destination path irrespective of the node failure, and
- to select, responsive to the receiving of the explicit notification message of the second node 'S' losing connectivity to the third node 'E', the fourth neighbouring node 'N' (106) as an alternate if and only if:
Distance(fourth node N, Dest) < Distance(fourth node N, second node S) + Distance(second node S, Dest).

## Patentansprüche

1. Verfahren zum Umlenken von Verkehr in einer Topologie eines Netzwerks (10) auf der Grundlage von Berechnungen des Shortest Path First, SPF, wobei das Netzwerk eine Vielzahl von Knoten (101 bis 107), eine Verkehrsquelle 'SRC' (100) und ein Verkehrsziel 'DEST' (200) umfasst, wobei ein Weg von Knoten (105, 104, 101) einen kürzesten Quelle-zu-Ziel-Weg für den Verkehr von der Verkehrsquelle zu dem Verkehrsziel darstellt, und wobei jeder Knoten einen vorab berechneten kürzesten Knoten-zu-Ziel-Weg von dem jeweiligen Knoten zu dem Verkehrsziel aufweist, wobei das Verfahren in einem ersten Knoten 'A' (105) von zwei Knoten durchgeführt wird und die Schritte umfasst:
Empfangen (S4), von einem zweiten Knoten 'S' (104) bei dem ersten Knoten, einer Benachrichtigung, die einen Verbindungsverlust zu einem dritten Knoten 'E' (101) angibt, der zu dem kürzesten Quelle-zu-Ziel-Weg gehört, wobei der erste Knoten ein nächster Sprung des zweiten Knotens ist; und
Auswählen (S5), bei dem ersten Knoten, eines benachbarten Knotens als einen neuen nächsten Sprung, dessen kürzester Knoten-zu-Ziel-Weg nicht den Knoten mit der verlorenen Verbindung kreuzt,
wobei:
die Benachrichtigung eine explizite Benachrichtigungsnachricht ist, bei dem ersten Knoten 'A' (105) empfangen wird und einen Ausfall des zweiten Knotens 'S' (104) angibt, der die Konnektivität mit dem dritten Knoten 'E' (101) verliert,
der erste Knoten 'A' (105) den Auswahlschritt durchführt, um einen vierten benachbarten Knoten 'N' (106, 107) als eine Alternative zu wählen, die keine explizite Benachrichtigung auf Grund dessen braucht, das ihr vorab berechneter Knoten-zu-Ziel-Weg der kürzeste Knoten-zu-Ziel-Weg ohne Rücksichtnahme auf den Knotenausfall ist,
der Auswahlschritt weiterhin in Antwort auf das Empfangen der expliziten Benachrichtigungsnachricht des zweiten Knotens 'S', der die Konnektivität mit dem dritten Knoten 'E' verliert, den vierten benachbarten Knoten 'N' (106) als eine Alternative dann und nur dann auswählt, falls:
Distanz (vierter Knoten N, DEST) < Distanz (vierter Knoten N, zweiter Knoten S) + Distanz (zweiter Knoten S, DEST).

2. Verfahren gemäß Anspruch 1, wobei der Auswahlschritt weiterhin ein Auswählen des nächsten neuen Sprungs des ersten Knotens nach dem Empfang der Benachrichtigung umfasst, dass er nicht auf den kürzesten Knoten-zu-Ziel-Weg des ersten Knotens liegt.

3. Verfahren gemäß Anspruch 1,
wobei der vierte benachbarte Knoten 'N' knotenschützend ist, falls:
Distanz (vierter Knoten N, DEST) < Distanz (vierter Knoten N, dritter Knoten) + Distanz (dritter Knoten E, DEST).

4. Verfahren gemäß Anspruch 3, wobei der Knoten 'N' kein Nachbar des Knotens 'S' ist.

5. Verfahren gemäß Anspruch 1, 3 oder 4, weiterhin umfassend:
Durchführen (S1), durch jeden der Vielzahl von Knoten in dem Netzwerk, einer allpaarigen SPF-Berechnung, um die Distanzen zwischen jeden zwei Knoten zu erlernen.

6. Verfahren gemäß zumindest einem der vorangegangenen Ansprüche, weiterhin umfassend:
Berechnen (S2), durch jeden der Vielzahl von Knoten in dem Netzwerk, eines alternativen nächsten Sprungs für entfernt liegende Knoten mit verlorener Verbindung.

7. Verfahren gemäß Anspruch 6, wobei der Berechnungsschritt weiterhin umfasst:
Bestimmen (S2-3) von jeweiligen kürzesten Wegen zu jedem jeweiligen von Zielknoten dem Netzwerk.

8. Verfahren gemäß Anspruch 7, wobei jeder der jeweiligen kürzesten Wege ein Directed Acyclic Graph-, DAG, -Untergraf ist und der Bestimmungsschritt einen Equal-Cost Multi-Path, ICMP, verwendet, um den Untergrafen zu bestimmen.

9. Verfahren gemäß Anspruch 8, weiterhin umfassend:
Vorabberechnen (S2-1), für jede Anbindung und Knoten, als einen vorhergesagten Ausfall, des Untergrafen, ob ein nächster Sprung bereits zu einem benachbarten Knoten weist, dessen kürzester Knoten-zu-Ziel-Weg nicht den vorhergesagten Ausfall kreuzt; und
Installieren (S2-2) des vorab berechneten nächsten Sprungs, falls der vorab Vorabberechnungsschritt ein positives Ergebnis ergibt.

10. Computerprogrammprodukt, umfassend Programmcodeabschnitte zur Durchführung des Verfahrens gemäß zumindest einem der vorangegangenen Ansprüche, wenn das Computerprogrammprodukt auf einer oder mehreren Computervorrichtungen ausgeführt wird.

11. Computerprogrammprodukt gemäß Anspruch 10, wobei das Computerprogrammprodukt auf einem computerlesbaren Aufzeichnungsmedium gespeichert ist.

12. Erster Knoten 'A' (105) zum Umlenken von Verkehr in einer Topologie eines Netzwerks (10) auf der Grundlage von Shortest Path First, SPF, -Berechnungen, wobei das Netzwerk eine Vielzahl von Knoten (101 bis 107), eine Verkehrsquelle 'SRC' (100) und ein Verkehrsziel 'DEST' (200) umfasst, wobei ein Weg von Knoten (105, 104, 101) einen kürzesten Quelle-zu-Ziel-Weg für den Verkehr von der Verkehrsquelle zu dem Verkehrsziel darstellt, und wobei jeder Knoten einen vorab berechneten kürzesten Knoten-zu-Ziel-Weg von dem jeweiligen Knoten zu dem Verkehrsziel aufweist, wobei der erste Knoten umfasst:
eine Einrichtung (1014), die eingerichtet ist, um von einem zweiten Knoten 'S' (104) bei dem ersten Knoten eine Benachrichtigung zu empfangen, die einen Verbindungsverlust zu einem dritten Knoten 'E' (101) angibt, der zu dem kürzesten Quelle-zu-Ziel-Weg gehört, wobei der erste Knoten ein nächster Sprung des zweiten Knotens ist; und
eine Einrichtung (1016), die eingerichtet ist, um bei dem ersten Knoten einen benachbarten Knoten als einen neuen nächsten Sprung auszuwählen, dessen kürzester Knoten-zu-Ziel-Weg nicht den Knoten mit verlorener Verbindung kreuzt,
wobei:
die Benachrichtigung eine explizite Benachrichtigungsnachricht ist und eingerichtet ist, um bei dem ersten Knoten 'A' (105) empfangen zu werden und um einen Ausfall des zweiten Knotens 'S' (104) anzugeben, der die Konnektivität zu dem dritten Knoten 'E' (101) verliert,
wobei der ersten Knoten 'A' (105) eingerichtet ist, um durchzuführen:
- um einen vierten benachbarten Knoten 'N' (106, 107) als eine Alternative auszuwählen, die keine explizite Benachrichtigung aufgrund dessen erfordert, dass ihr vorab berechneter Knoten-zu-Ziel-Weg der kürzeste Knoten-zu-Ziel-Weg ohne Rücksichtnahme auf den Knotenausfall ist, und
- um in Antwort auf das Empfangen der expliziten Benachrichtigungsnachricht des zweiten Knotens 'S', der die Konnektivität zu dem dritten Knoten 'E' verliert, den vierten benachbarten Knoten 'N' (106) als eine Alternative dann und nur dann auszuwählen, falls:
Distanz (vierter Knoten N, DEST) < Distanz (vierter Knoten N, zweiter Knoten S) + Distanz (zweiter Knoten S, DEST).

## Revendications

1. Procédé de réacheminement de trafic dans une topologie de réseau (10) basée sur des calculs du chemin le plus court le premier (SPF), le réseau comprenant une pluralité de noeuds (101 - 107), une source de trafic « Src » (100) et une destination de trafic « Dest » (200), dans lequel un chemin de noeuds (105, 104, 101) représente un chemin le plus court de source à destination pour le trafic de la source de trafic à la destination de trafic, et dans lequel chaque noeud a pré-calculé un chemin le plus court de noeud à destination du noeud respectif à la destination de trafic, le procédé étant mis en oeuvre dans un premier noeud « A » (105) parmi deux noeuds et comprenant les étapes de :
réception (S4), d'un deuxième noeud « S » (104) au niveau du premier noeud, d'une notification indiquant une perte de connexion à un troisième noeud « E » (101) appartenant au chemin le plus court de source à destination, le premier noeud étant un saut suivant du deuxième noeud ; et
sélection (S5), au niveau du premier noeud, d'un noeud voisin comme un nouveau saut suivant dont le chemin le plus court de noeud à destination ne croise pas le noeud ayant perdu la connexion,
dans lequel :
la notification est un message de notification explicite, est reçue au niveau du premier noeud « A » (105), et indique une défaillance du deuxième noeud « S » (104) perdant la connectivité au troisième noeud « E » (101),
le premier noeud « A » (105) met en oeuvre l'étape de sélection de manière à sélectionner un quatrième noeud voisin « N » (106, 107) comme une alternative qui ne requiert pas de notification explicite du fait de son chemin de noeud à destination pré-calculé étant le chemin le plus court de noeud à destination sans tenir compte de la défaillance de noeud, et
l'étape de sélection sélectionne en outre, en réponse à la réception du message de notification explicite du deuxième noeud « S » perdant la connectivité au troisième noeud « E », le quatrième noeud voisin « N » (106) comme une alternative si et seulement si :
Distance(quatrième noeud N, Dest) < Distance(quatrième noeud N, deuxième noeud S + Distance(deuxième noeud S, Dest).

2. Procédé selon la revendication 1, dans lequel l'étape de sélection comprend en outre la sélection du nouveau saut suivant du premier noeud après réception de la notification comme n'étant pas sur le chemin le plus court de noeud à destination du premier noeud.

3. Procédé selon la revendication 1,
dans lequel le quatrième noeud voisin « N » est de protection de noeud si :
Distance(quatrième noeud N, Dest) < Distance(quatrième noeud N, troisième noeud E) + Distance(troisième noeud E, Dest).

4. Procédé selon la revendication 3, dans lequel le noeud « N » n'est pas un voisin du noeud « S ».

5. Procédé selon la revendication 1, 3 ou 4, comprenant en outre :
l'exécution (S1), par chacun de la pluralité de noeuds dans le réseau, d'un calcul SPF pour toutes les paires pour apprendre les distances entre deux noeuds quelconques.

6. Procédé selon l'une quelconque des revendications précédentes, comprenant en outre :
le calcul (S2), par chacun de la pluralité de noeuds dans le réseau, d'un autre saut suivant pour des noeuds distants ayant perdu la connexion.

7. Procédé selon la revendication 6, dans lequel l'étape de calcul comprend en outre :
la détermination (S2-3) de chemins les plus courts respectifs jusqu'à chacun respectif parmi des noeuds de destination dans le réseau.

8. Procédé selon la revendication 7, dans lequel chacun des chemins les plus courts respectifs est un sous-graphe de graphe acyclique dirigé (DAG) et l'étape de détermination utilise un multi-chemin d'égalité de coût, ECMP, pour déterminer le sous-graphe.

9. Procédé selon la revendication 8, comprenant en outre :
le pré-calcul (S2-1), pour chaque liaison et noeud, comme une défaillance anticipée, du sous-graphe, si un saut suivant pointe déjà vers un noeud voisin dont le chemin le plus court de noeud à destination ne croise pas la défaillance anticipée ; et
la mise en place (S2-2) du saut suivant pré-calculé si l'étape de pré-calcul donne un résultat positif.

10. Produit de programme informatique comprenant des parties de code de programme pour mettre en oeuvre le procédé selon l'une quelconque des revendications précédentes lorsque le produit de programme informatique est exécuté sur un ou plusieurs dispositifs informatiques.

11. Produit de programme informatique selon la revendication 10, dans lequel le produit de programme informatique est stocké sur un support d'enregistrement lisible par un ordinateur.

12. Premier noeud « A » (105) pour réacheminer un trafic dans une topologie de réseau (10) basée sur des calculs du chemin le plus court le premier (SPF), le réseau comprenant une pluralité de noeuds (101 - 107), une source de trafic « Src » (100) et une destination de trafic « Dest » (200), dans lequel un chemin de noeuds (105, 104, 101) représente un chemin le plus court de source à destination pour le trafic de la source de trafic à la destination de trafic, et dans lequel chaque noeud a pré-calculé un chemin le plus court de noeud à destination du noeud respectif à la destination de trafic, le premier noeud comprenant :
un moyen (1014) adapté à recevoir, d'un deuxième noeud « S » (104) au niveau du premier noeud, une notification indiquant une perte de connexion à un troisième noeud « E » (101) appartenant au chemin le plus court de source à destination, le premier noeud étant un saut suivant du deuxième noeud ; et
un moyen (1016) adapté à sélectionner, au niveau du premier noeud, un noeud voisin comme un nouveau saut suivant dont le chemin le plus court de noeud à destination ne croise pas le noeud ayant perdu la connexion,
dans lequel :
la notification est un message de notification explicite, et adapté à être reçue au niveau du premier noeud « A » (105), et à indiquer une défaillance du deuxième noeud « S » (104) perdant la connectivité au troisième noeud « E » (101),
le premier noeud « A » (105) est adapté à fonctionner :
- de manière à sélectionner un quatrième noeud voisin « N » (106, 107) comme une alternative qui ne requiert pas de notification explicite du fait de son chemin de noeud à destination pré-calculé étant le chemin le plus court de noeud à destination sans tenir compte de la défaillance de noeud, et
- à sélectionner, en réponse à la réception du message de notification explicite du deuxième noeud « S » perdant la connectivité au troisième noeud « E », le quatrième noeud voisin « N » (106) comme une alternative si et seulement si :
Distance(quatrième noeud N, Dest) < Distance(quatrième noeud N, deuxième noeud S + Distance(deuxième noeud S, Dest).
